# EUROPÄISCHE PATENTSCHRIFT

(11) **EP 3 964 370 B1**
(45) Veröffentlichungstag und Bekanntmachung des Hinweises auf die Patenterteilung: **28.10.2026**
(21) Anmeldenummer: 21168853.6
(22) Anmeldetag: 16.04.2021
(51) Int. Cl.: B60G 5/01, B60G 17/005, B60G 17/056, B60G 21/067, B60G 21/10, B66C 23/80

(54) **MOBILKRAN-FEDERUNGSSYSTEM MIT DEAKTIVIERBARER WANKSTABILISIERUNG**
MOBILE CRANE SUSPENSION SYSTEM WITH DEACTIVATABLE ROLL STABILIZATION
SYSTÈME DE SUSPENSION DE GRUE MOBILE À STABILISATION ANTIROULIS POUVANT ÊTRE DÉSACTIVÉE

(30) Priorität: 07.09.2020 DE 202020105150 U
(43) Veröffentlichungstag der Anmeldung: 09.03.2022
(73) Patentinhaber: Manitowoc Crane Group France SAS, 69574 Dardilly Cedex (FR)
(72) Erfinder: WILKEN, Fabian, 26655 Westerstede (DE); SCHÜRMANN, Johannes, 26441 Jever (DE); JÄNICKE, Thomas, 26215 Wiefelstede (DE); EMKEN, Matthias, 26472 Esens (DE)
(74) Vertreter: SSM Sandmair

(56) Entgegenhaltungen:
- EP-A1- 2 098 389
- CN-A- 103 009 955
- CN-A- 109 441 913
- US-A1- 2013 220 110

## Beschreibung

Die vorliegende Erfindung betrifft ein hydropneumatisches Federungssystem für ein Mobilkran-Fahrwerk, bei welchem Federbeine auf der linken Fahrzeugseite mit Federbeinen auf der rechten Fahrzeugseite hydraulisch miteinander verbunden sind. Hierdurch wird eine Wankstabilisierung erreicht, so dass im Straßenverkehr, insbesondere bei Kurvenfahrten, Bewegungen des Fahrzeugs um seine Längsachse entgegengewirkt wird.

Bedingt durch den hohen, im Wesentlichen vom Kran-Ausleger und gegebenenfalls gerüsteten Gegengewichten hervorgerufenen Schwerpunkt sind Mobilkrane während des Straßentransports besonders anfällig für Wankbewegungen, d. h. gegenüber einer rotierenden Bewegung des Fahrzeugs um seine Längsachse. Um kritische Fahrzustände zu verhindern, weisen moderne Mobilkrane daher eine sogenannte Wankstabilisierung auf, welche die Federungen des Fahrwerks an beiden Fahrzeugseiten miteinander koppelt. Wenn beispielsweise ein auf der kurvenäußeren Seite des Fahrwerks angeordnetes Federbein aufgrund der Fahrzeugdynamik eintaucht, d. h. zusammengedrückt wird, bewirkt die Wankstabilisierung, dass das entsprechend auf der rechten Fahrwerkseite angeordnete Federbein nicht oder nur in geringerem Maße ausfedert, oder sogar wie das kurvenäußere Federbein eintaucht. Durch die Installation einer solchen Wankstabilisierung an einzelnen oder gar sämtlichen Fahrwerksachsen kann das Fahrverhalten entscheidend verbessert werden. Aus der Druckschrift US 2013/0220110 A1 ist ein Mobilkran-Federungssystem gemäß dem Oberbegriff des Patentanspruchs 1 bekannt.

Allerdings können mit einer solchen Wankstabilisierung auch unerwünschte Fahrwerkseigenschaften einhergehen. Zum einen kann eine Verringerung des Fahrzeuggewichts, etwa beim Abrüsten der Gegengewichte oder des Auslegers oder dem Nachführen des Auslegers in einem sogenannten "Dolly-Betrieb" bei gleichbleibender Auslegung des hydraulischen Fahrwerks, insbesondere bei unverändertem Vorspanndruck im Fahrwerks-Hydraulikspeicher, ein "hartes" Fahrwerksverhalten bewirken, was beispielsweise bei Kurvenfahrten zu einer Traktionsverminderung der kurveninneren Antriebsräder führen kann. Ferner wird durch das Unterbinden gegenläufiger Bewegungen in den jeweiligen Fahrwerkshälften durch die Wankstabilisierung auch der mögliche Umfang einer Achsverschränkung in erheblichem Maße reduziert. Auch bei Geländefahrten kann es demnach zu Traktionsverlusten kommen. Im Falle von Fahrwerken mit Einzelradaufhängung können ferner sehr hohe Belastungen des Fahrwerksrahmens bzw. Kran-Unterwagens auftreten.

Der vorliegenden Erfindung liegt die Aufgabe zugrunde, ein Mobilkran-Federrungssystem mit einer Wankstabilisierung bereitzustellen, welches die oben genannten Nachteile nicht aufweist. Diese Aufgabe wird durch den Gegenstand des unabhängigen Anspruchs 1 und des nebengeordneten Anspruchs 9 gelöst. Die Unteransprüche definieren dabei bevorzugte Ausführungsformen der vorliegenden Erfindung.

Das erfindungsgemäße Mobilkran-Federungssystem ist als hydropneumatisches Federungssystem ausgestaltet und umfasst
- zumindest ein der linken Fahrwerksseite zugeordnetes, linkes Federbein mit einer Kolbenkammer und einer Ringkammer;
- zumindest ein der rechten Fahrwerksseite zugeordnetes, rechtes Federbein mit einer Kolbenkammer und einer Ringkammer;
- eine Wankstabilisierungseinrichtung, welche eine hydraulische Verbindung zwischen der Kolbenkammer des rechten Federbeins und der Ringkammer des linken Federbeins, und eine hydraulische Verbindung zwischen der Kolbenkammer des linken Federbeins und der Ringkammer des rechten Federbeins aufweist; und
- jeweils ein der linken Fahrwerksseite und der rechten Fahrwerksseite (R) zugeordnetes, diskret schaltbares Ventil, welches sowohl die von der Wankstabilisierungseinrichtung bereitgestellten hydraulischen Verbindungen wahlweise trennt oder freigibt, als auch gleichzeitig hydraulische Verbindungen zwischen den Kolbenkammern und den Ringkammern derselben Federbeine freigibt bzw. trennt.

Mit anderen Worten umfasst das erfindungsgemäße Federungssystem eine aus dem Stand der Technik bekannte Wankstabilisierungseinrichtung, mittels welcher die Zylinderkammern der hydraulischen Federbeine zu beiden Seiten des Fahrwerks "über Kreuz" fluidisch miteinander verbunden werden. So werden die Kolbenkammern der entsprechenden Federbeine auf der linken Fahrwerkseite mit den Ringkammern der Federbeine auf der rechten Fahrwerkseite verbunden, wobei die Ringkammern der Federbeine auf der linken Fahrwerkseite mit den Kolbenkammern der entsprechenden Federbeine auf der rechten Fahrwerkseite in Verbindung stehen. Grundsätzlich ist hierbei eine paarweise Verbindung zwischen jeweils zwei Federbeinen denkbar, welche derselben Fahrwerksachse zugeordnet sind. Es ist jedoch auch vorstellbar, dass mehrere Federbeine auf einer Fahrwerkseite, welche insbesondere unterschiedlichen Fahrwerksachsen zugeordnet sind, zu Gruppen zusammengefasst werden und über eine gemeinsame fluidische Verbindung mit der korrespondierenden Federbeingruppe auf der jeweils anderen Fahrwerkseite verbunden sind. Ebenso ist es grundsätzlich vorstellbar, dass beliebige Federbeine auf der linken bzw. rechten Fahrwerksseite miteinander verbunden werden, welche sogar unterschiedlichen Fahrwerksachsen zugeordnet sein können.

Die vorliegende Erfindung sieht nun jeder Fahrwerksseite zugeordnete Ventile vor, mittels welcher die hydraulische Verbindung zwischen den Fahrwerksseiten getrennt werden kann. Die hydraulische Wankstabilisierung kann somit durch die Ventile für die betreffenden Federbeine bzw. Fahrwerksachsen deaktiviert werden, so dass den eingangs beschriebenen Nachteilen abgeholfen wird.

Für den Kranführer wird also die Möglichkeit geschaffen, beispielsweise beim Übergang von einer Straßenfahrt zu einer Geländefahrt, beim Unterschreiten einer vordefinierten Achslast aber auch für sämtliche anderen Fahrtzustände, bei welchen mit negativen Einflüssen der Wankstabilisierung zu rechnen ist, diese manuell zu deaktivieren, etwa durch Betätigung der Ventile. Sobald eine Wankstabilisierung wieder gewünscht ist, kann diese über die Ventile auch wieder aktiviert werden. Grundsätzlich wäre auch eine automatische Aktivierung und/oder Deaktivierung in Abhängigkeit vorliegender und beispielsweise über Sensoren ermittelter Fahrtzustände denkbar, wie beispielsweise Geschwindigkeit, Achslast oder Fahrwerksbelastung.

Ferner ist es denkbar, dass die Federbeine für unterschiedliche Achsen bzw. Achsgruppen über unabhängig voneinander deaktivierbare/aktivierbare Wankstabilisierungen verbunden sind, so dass die Fahrwerkseigenschaften für bestimmte Fahrzustände gezielt beeinflusst werden können. Beispielsweise kann beim Nachführen des Kranauslegers auf einem Nachläufer (bzw. "Dolly") die Wankstabilisierung der vorderen Fahrwerksachsen deaktiviert werden, um weiterhin Antriebs- und Bremskräfte in idealer Weise auf die Fahrbahn zu übertragen. Im hinteren Fahrzeugbereich hingegen kann die Wankstabilisierung aktiviert werden, um das Fahrzeug gegenüber den beim Dolly-Zugbetrieb wirkenden Kräften und Momenten zu stabilisieren.

Erfindungsgemäß geben die Ventile hydraulische Verbindungen zwischen den Kolbenkammern und den Ringkammern derselben Federbeine wahlweise frei oder trennen diese. Dies geschieht gleichzeitig mit der Trennung bzw. Freigabe der hydraulischen Verbindungen der Wankstabilisierungseinrichtung. Sobald die Kolbenkammer mit der Ringkammer desselben Federbeins hydraulisch in Verbindung steht, insbesondere über einen Hydraulikspeicher des Federungssystems, wird das Verhalten eines gewöhnlichen hydraulischen Federbeins ohne Wankstabilisierung erreicht. Sobald das Federbein vom Rad belastet wird, etwa beim Überfahren einer Bodenunebenheit, taucht das Federbein ein. Hierbei strömt die Hydraulikflüssigkeit aus der Kolbenkammer in eine mit der Ringkammer desselben Federbeins verbundene Leitung. Infolgedessen verringert sich das Volumen der Kolbenkammer. Gleichzeitig strömt Hydraulikflüssigkeit aus der Leitung in die Ringkammer desselben Federbeins, deren Volumen sich folglich vergrößert. Die hierbei auftretende, von der durch die Ringkammer hindurchgeführten Kolbenstange verursachte Volumendifferenz zwischen den Federbeinkammern kann durch einen an die Verbindungsleitung angeschlossenen Hydraulikspeicher aufgefangen werden. Da der Fluiddruck in der Kolbenkammer und in der Ringkammer identisch ist, die Kolbenkammer allerdings eine größere Wirkfläche auf den gemeinsamen Federbein-Kolben aufweist als die Ringkammer, führt eine Entlastung des Federbeins dazu, dass das Federbein wieder automatisch ausfedert. Das hierfür erforderliche, zusätzliche Fluidvolumen wird hierbei wieder dem Hydraulikspeicher entnommen.

Gemäß einer bevorzugten Ausführungsform der Erfindung weisen die Ventile zur Freigabe und Trennung der Verbindungen zwischen den Kolbenkammern und den Ringkammern der linken und rechten Federbeine und/oder zur Trennung und Freigabe der Verbindungen zwischen den Kolbenkammern und Ringkammern derselben Federbeine Zwei-Wege-Ventile auf. So wird jede der die beiden Fahrwerkseiten verbindenden Leitungen über ein diskret schaltendes Ventil geöffnet und auch wieder verschlossen. Ebenso werden die Verbindungsleitungen zwischen den Kolben- und Ringkammern derselben Federbeine mittels eines diskret schaltbaren Ventils geöffnet und auch wieder verschlossen. Hierbei ist es vorstellbar, dass durch Einsatz von 3/2- oder 4/2-Wege-Ventilen die Federbeinkammern wechselweise entweder mit den jeweils anderen Federbeinkammern desselben Federbeins oder mit den jeweils anderen Kammern des/der korrespondierenden Federbeins/Federbeine auf der anderen Fahrwerksseite verbunden werden. Für ein Zylinderpaar können demnach zwei 3/2- oder 4/2-Wege-Ventile zum Einsatz kommen. Die Ventile können hierbei insbesondere elektrisch betätigt werden, wobei grundsätzlich auch eine pneumatische, hydraulische oder eine beliebige, zumindest zwei dieser Wirkprinzipien kombinierende Betätigung denkbar wäre.

Gemäß einer bevorzugten Ausführungsform umfasst, wie bereits weiter oben angesprochen wurde, das Federungssystem mehrere linke und mehrere rechte Federbeine auf, die paarweise einer von mehreren Fahrwerksachsen zugeordnet sind. Einer einzelnen Fahrwerksachse können also ein oder mehrere Federbeinpaare mit jeweils einem linken und einem rechten Federbein zugeordnet sein. Hierbei können, wie weiter oben ebenfalls angesprochen wurde, mehrere Federbeine einer Fahrzeugseite zu einer Gruppe zusammengefasst werden, die über eine gemeinsame Wankstabilisierungseinrichtung mit den Federbeinen der korrespondierenden Federbeingruppe auf der jeweils anderen Fahrwerkseite verbunden sind. Hierdurch kann die Anzahl der Systemkomponenten des Federungssystems und auch insbesondere die Anzahl der Systemkomponenten für die Wankstabilisierungseinrichtung und die Ventile reduziert werden.

Ferner kann das erfindungsgemäße Federungssystem ein oder mehrere Blockiereinrichtungen aufweisen, welche hydraulische Verbindungen zwischen zumindest einem Federbein und zumindest einem Federungs-Hydraulikspeicher wahlweise trennen oder freigeben. Dabei ist es grundsätzlich vorstellbar, dass für jedes Federbein eine eigene Blockiereinrichtung vorgesehen ist, allerdings können auch mehrere Federbeine auf einer Fahrwerkseite und/oder achsweise mit einer Blockiereinrichtung verbunden sein. Bei Aktivierung der Blockiereinrichtung "sperrt" diese die damit verbundenen Federbeine, die Federung ist somit für die betreffenden Teile des Federungssystems deaktiviert. Eine Deaktivierung der Blockiereinrichtung führt umgekehrt wieder zu einer Aktivierung der Federung.

Ferner kann das erfindungsgemäße Federungssystem auch zumindest eine Hubeinrichtung aufweisen, mittels welcher eine hydraulische Verbindung zumindest eines Federbeins mit einem Hydraulikkreis getrennt und auch wieder freigeben werden kann. Wiederum kann grundsätzlich für jedes Federbein eine eigene Hubeinrichtung vorgesehen sein, allerdings können mehrere Federbeine auf einer Fahrwerkseite und/oder achsweise mit einer gemeinsamen Hubeinrichtung versorgt werden. Über die Hubeinrichtung kann den betreffenden Teilen des Federungssystems Hydraulikflüssigkeit zugeführt und auch wieder entnommen werden, so dass sich die jeweiligen Federbeine ausfahren aber auch wieder absenken lassen.

Gemäß einer weiteren Ausführungsform der vorliegenden Erfindung können die voranstehend beschriebenen Blockiereinrichtungen und/oder Hubeinrichtungen unabhängig von den Ventilen betätigt werden, so dass die von ihnen wahlweise getrennten oder freigegebenen hydraulischen Verbindungen unabhängig von der Wankstabilisierung geschaltet werden können. So können etwa durch die Deaktivierung der Wankstabilisierung einzelne Federbeine oder ganze Federbeingruppen von den korrespondierenden Federbeinen bzw. Gruppen auf der jeweils anderen Fahrzeugseite getrennt werden, was ein isoliertes Anheben oder Absenken bestimmter Federbeine/Gruppen durch eine zugeordnete Hubeinrichtung ermöglicht, ohne dass es hierbei zu einer Beeinflussung der Federbeine/Gruppen auf der anderen Fahrwerkseite kommt. Entsprechend ist auch ein "einseitiges" Sperren einzelner Federbeine/Federbeingruppen möglich.

Gemäß einer weiteren Ausführungsform weist das Federungssystem einen, bezogen auf die linke und die rechte Fahrwerkseite, funktionssymmetrischen Aufbau an zumindest einer Fahrwerksachse auf. Mit anderen Worten weist zumindest ein Federbein bzw. zumindest eine Federbeingruppe die gleichen Federungs-Systemkomponenten auf wie das korrespondierende Federbein bzw. die korrespondierende Federbeingruppe auf der jeweils anderen Fahrwerkseite.

Gemäß einer bevorzugten Ausführungsform werden mehrere Fahrwerksachsen in entsprechende linke und rechte Federbeingruppen bzw. Achsgruppen zusammengefasst. Insbesondere bei einem 6-achsigen Mobilkran können dabei die zwei in Fahrtrichtung vorderen Fahrwerksachsen und die vier in Fahrtrichtung hinteren Fahrwerksachsen zu je einer linken und einer rechten Achsgruppe zusammengefasst werden. Insbesondere kann dabei jeweils eine linke Achsgruppe zusammen mit der jeweils korrespondierenden rechten Achsgruppe eine Wankstabilisierungseinrichtung aufweisen. Ferner können die einzelnen Wankstabilisierungseinrichtungen des Federungssystems unabhängig voneinander betätigt werden.

Ein weiterer Aspekt der vorliegenden Erfindung betrifft einen Mobilkran mit einem hydraulischen Federungssystem gemäß einer der oben beschriebenen Ausführungsformen.

An dieser Stelle sei erwähnt, dass sämtliche oben genannten Merkmale und Ausführungsformen sinngemäß auch für eine Schaltung eines "Nickausgleichs" Anwendung finden kann. Hierfür wäre es vorstellbar, dass zumindest ein Federbein in einem vorderen Bereich des Fahrwerks mit zumindest einem Federbein im hinteren Bereich des Fahrwerks hydraulisch verbunden ist. Durch eine entsprechende Schalteinrichtung bzw. Ventile kann die Nickstabilisierung zu- oder abgeschaltet werden, sodass Bewegungen des Fahrwerks um seine Querachse unterbunden bzw. freigegeben werden. Selbstverständlich ist es hierbei auch vorstellbar, dass eine solche schaltbare Nickstabilisierungseinrichtung zusammen mit einer vorausgehend beschriebenen Wankstabilisierungseinrichtung realisiert wird.

Eine bevorzugte Ausführungsform der vorliegenden Erfindung wird im Folgenden unter Bezugnahme auf die beiliegenden Figuren näher erläutert. Die Erfindung kann sämtliche hierin beschriebenen Merkmale einzeln sowie in jedweder sinnvollen Kombintaion gemäß den beigefügten Ansprüchen umfassen. Es zeigen:
- Figur 1: zwei vordere Achsgruppen des erfindungsgemäßen Federungssystems;
- Figur 2: ein gesamtes Federungssystem mit den in der Figur 1 gezeigten Achsgruppen.

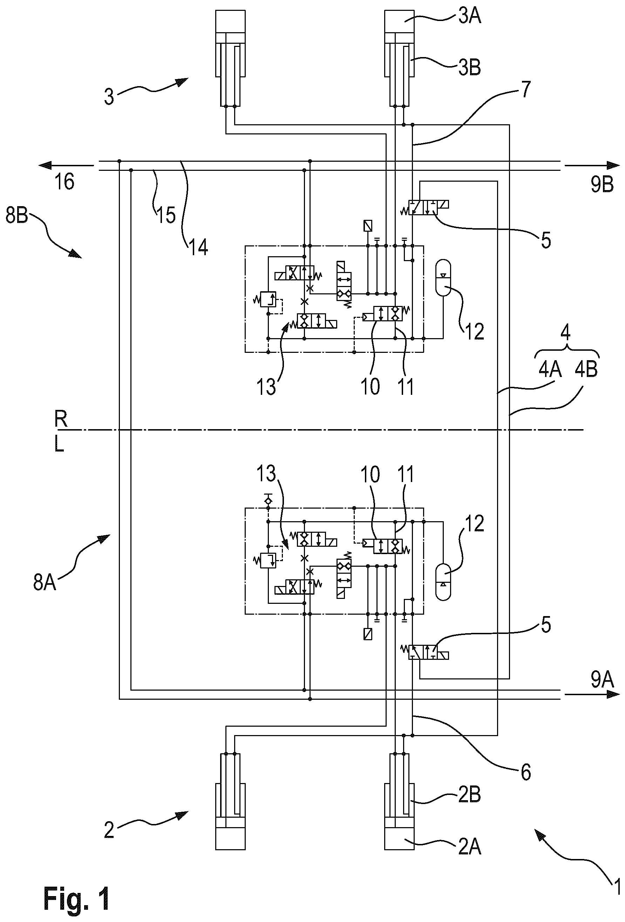

Die Figur 1 zeigt die vorderen beiden Achsgruppen 8A und 8B eines erfindungsgemäßen Federungssystems 1. In der linken Achsgruppe 8A sind die beiden vorderen Federbeine 2 zusammengefasst, welche jeweils eine Kolbenkammer 2A und eine Ringkammer 2B aufweisen. Entsprechend wird die rechte Achsgruppe 8B durch die Federbeine 3 gebildet, welche wiederum jeweils eine Kolbenkammer 3A und eine Ringkammer 3B aufweisen.

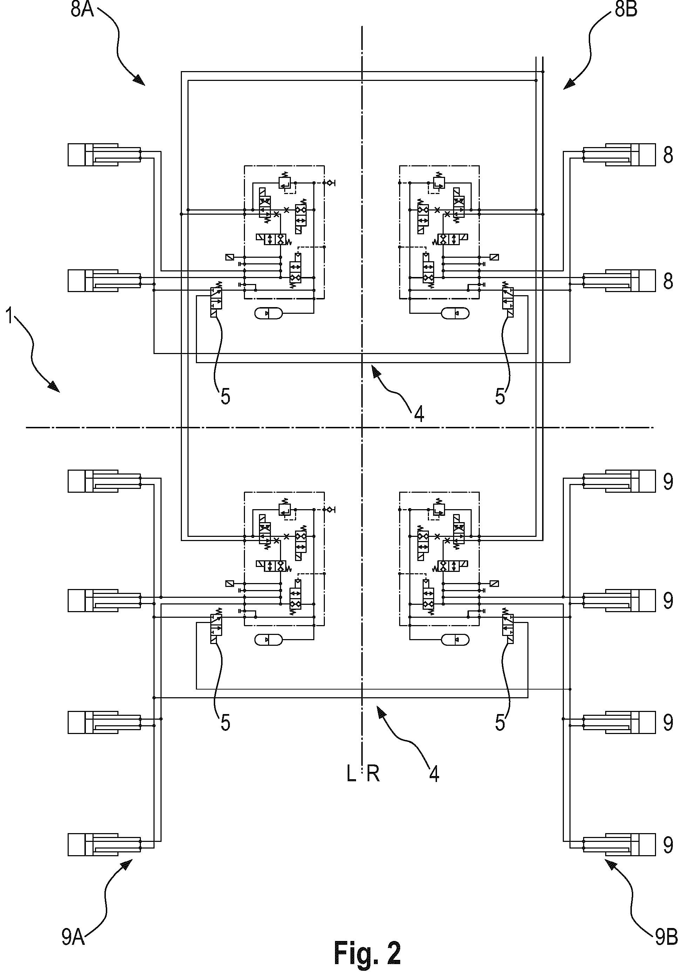

Da die beiden Achsgruppen 8A und 8B des Federungssystems 1 funktionssymmetrisch aufgebaut sind, soll sich die folgende Beschreibung auf die linke vordere Achsgruppe 8A beschränken. Die Funktionen der Achsgruppe 8B sind hierzu identisch. Gleiches gilt für die in der Figur 2 gezeigten, hinteren beiden Achsgruppen 9A und 9B, die sich von den Achsgruppen 8A und 8B einzig in der Anzahl der hiervon zusammengefassten Federbeine unterscheiden.

Die Achsgruppe 8A ist über eine Wankstabilisierungseinrichtung 4 mit der Achsgruppe 8B verbunden, so dass sich die entsprechenden Federbeine 2 und 3 zur Stabilisierung des Fahrzeugs um seine Längsachse gegenseitig beeinflussen. Hierbei sind die Kolbenkammern 2A auf der linken Fahrwerksseite L über eine Hydraulikleitung 4B mit den Ringkammern 3B verbunden. Die Ringkammern 2B stehen mit den Kolbenkammern 3A über die Hydraulikleitung 4A in Verbindung. Sobald das oder die Federbeine 2 eintauchen und sich das Volumen der Kolbenkammern 2A in der Folge verringert, wird Hydraulikflüssigkeit in die Ringkammern 3B der Federbeine 3 verbracht, so dass die Federbeine 3 letztendlich ebenfalls eintauchen.

Zur Deaktivierung der Wankstabilisierungseinrichtung 4 sind für jede Achsgruppe 2 3/2-Wege-Ventile 5 vorgesehen, mittels welcher die Querverbindungen 4A und 4B zwischen den Federbeinen 2 und 3 getrennt werden kann. In der Figur 1 sind die Ventile 5 in ihrer Ruhestellung zu sehen. Durch elektrische Aktivierung der Ventile 5 wird die durch die Hydraulikleitungen 4A und 4B bereitgestellte Verbindung getrennt und zugleich eine Verbindung 6 (bzw. 7 bei der Achsgruppe 8B) zwischen der Kolbenkammer 2A und der Ringkammer 2B freigegeben. Beim Eintauchen der Federbeine 2 wird nunmehr keine Hydraulikflüssigkeit auf die andere Fahrwerkseite verbracht, sondern wird demselben Federbein 2 wieder zugeführt.

Die bei Betätigung des Federbeins 2 auftretende Differenz im vom Federbein 2 aufgenommen Flüssigkeitsvolumen wird dem Hydraulikspeicher 12 entnommen bzw. zugeführt.

Mithilfe des Ventils 10 lässt sich die Hydraulikleitung 11 zwischen dem Hydraulikspeicher 12 und der Kolbenkammer 2A trennen, so dass das Federbein 2 bei Belastung nicht mehr eintauchen kann. Die Federung der Achsgruppe 8A wird durch Zurückfallen des Ventils 10 in seinen in der Figur 1 gezeigten Grundzustand blockiert und erst durch Aktivierung des Ventils 10 wieder freigeschaltet.

Ferner kann der Achsgruppe 8A über die Hydraulikleitungen 14 und 15 Hydraulikflüssigkeit von einem offenen Hydraulikkreis 16 zugeführt und auch wieder entnommen werden. Hierfür ist eine Hubeinrichtung 13 vorgesehen, welche zwei nicht näher bezeichnete Sperrventile und ein die Flussrichtung wahlweise umkehrendes Ventil aufweist. Beim Öffnen der im Grundzustand geschlossenen Sperrventile wird der Achsgruppe 8A über die Hydraulikleitung 14 Hydraulikflüssigkeit zugeführt, so dass die Federbeine 2 entsprechend ausfahren. Durch Schaltung des weiteren Ventils der Hubeinrichtung wird der Hydraulikspeicher 12 über die Hydraulikleitung 15 mit dem Tank des offenen Hydraulikkreises 16 verbunden, so dass die in der Achsgruppe 8A befindliche Hydraulikflüssigkeit in den Tank entweichen kann. Die Federbeine 2 tauchen dabei entsprechend ein.

Die alleinige Betätigung der Blockiereinrichtung 10 und/oder der Hubeinrichtung 13 auf einer Fahrwerksseite in oben beschriebener Weise würde bei aktivierter Wankstabilisierung die Federbeine 3 der Achsgruppe 8B beeinflussen. Durch Schließen der Ventile 5 kann dies unterbunden werden.

Die Figur 2 zeigt ein gesamtes Federungssystem gemäß der vorliegenden Erfindung, welches in vier Achsgruppen 8A, 8B, 9A, 9B unterteilt ist. Die vorderen beiden Achsgruppen 8A und 8B fassen jeweils zwei Federbeine 2, die hinteren Achsgruppen 9A und 9B jeweils vier Federbeine zusammen. Ansonsten ist die Funktionalität wie auch die einzelnen Systemkomponenten für sämtliche Achsgruppen 8A, 8B, 9A, 9B identisch.

## Patentansprüche

1. Hydropneumatisches Mobilkran-Federungssystem (1) mit
- zumindest einem der linken Fahrwerksseite (L) zugeordneten, linken Federbein (2) mit einer Kolbenkammer (2A) und einer Ringkammer (2B);
- zumindest einem der rechten Fahrwerksseite (R) zugeordneten, rechten Federbein (3) mit einer Kolbenkammer (3A) und einer Ringkammer (3B);
- einer Wankstabilisierungseinrichtung (4), welche eine hydraulische Verbindung (4A) zwischen der Kolbenkammer (3A) des rechten Federbeins (3) und der Ringkammer (2B) des linken Federbeins (2), und eine hydraulische Verbindung (4B) zwischen der Kolbenkammer (2A) des linken Federbeins (2) und der Ringkammer (3B) des rechten Federbeins (3) umfasst; **gekennzeichnet durch**
- jeweils ein der linken Fahrwerksseite (L) und der rechten Fahrwerksseite (R) zugeordnetes, diskret schaltbares Ventil (5), welches sowohl die von der Wankstabilisierungseinrichtung (4) bereitgestellten hydraulischen Verbindungen (4A, 4B) wahlweise trennt oder freigibt, als auch gleichzeitig hydraulische Verbindungen (6, 7) zwischen den Kolbenkammern (2A, 3A) und den Ringkammern (2B, 3B) derselben Federbeine (2, 3) freigibt bzw. trennt.

2. Mobilkran-Federungssystem nach Anspruch 1, wobei das Ventil (5) zur Freigabe und Trennung der Verbindungen (4A, 4B) zwischen den Kolbenkammern (2A, 3A) und den Ringkammern (2B, 3B) der linken und rechten Federbeine (2, 3) und/oder zur Trennung und Freigabe der Verbindungen (6, 7) zwischen den Kolbenkammern (2A, 3A) und den Ringkammern (2B, 3B) derselben Federbeine (2, 3) 2-Wege-Ventile, insbesondere 3/2- oder 4/2-Wege-Ventlile aufweist.

3. Mobilkran-Federungssystem nach einem der Ansprüche 1 bis 2, mit mehreren linken und rechten, jeweils paarweise einer von mehreren Fahrwerksachsen (8, 9) zugeordneten Federbeinen (2, 3), insbesondere wobei die hydraulischen Verbindungen (4A, 4B) zumindest einer Wankstabilisierungseinrichtung (4) Federbeine (2, 3) mehrerer Fahrwerksachsen (8, 9) hydraulisch miteinander verbinden.

4. Mobilkran-Federungssystem nach einem der Ansprüche 1 bis 3, mit ferner zumindest einer Blockiereinrichtung (10), welche eine hydraulische Verbindung (11) zwischen zumindest einem Federbein (2, 3) und zumindest einem Federungs-Hydraulikspeicher (12) wahlweise trennt oder freigibt.

5. Mobilkran-Federungssystem nach einem der Ansprüche 1 bis 4, mit ferner zumindest einer Hubeinrichtung (13), welche eine hydraulische Verbindung (14, 15) zwischen zumindest einem Federbein (2, 3) und zumindest einem Hydraulikkreis (16) wahlweise trennt oder freigibt.

6. Mobilkran-Federungssystem nach einem der Ansprüche 4 oder 5, wobei die von der zumindest einen Blockiereinrichtung (10) und/oder die von der zumindest einen Hubeinrichtung (13) wahlweise getrennten oder freigegebenen hydraulischen Verbindungen (11, 14, 15) unabhängig vom Betätigungszustand des Ventils (5) getrennt oder freigegeben werden.

7. Mobilkran-Federungssystem nach einem der Ansprüche 1 bis 6, mit einem, bezogen auf die linke und die rechte Fahrwerksseite (L, R), funktionssymmetrischen Aufbau an zumindest einer Fahrwerksachse (8, 9).

8. Mobilkran-Federungssystem nach einem der Ansprüche 1 bis 7, bei welchem mehrere Fahrwerksachsen (8, 9) in entsprechenden linken und rechten Achsgruppen (8A, 8B, 9A, 9B) zusammengefasst sind, insbesondere wobei die zwei in Fahrtrichtung vorderen Fahrwerksachsen (8) und die vier in Fahrtrichtung hinteren Fahrwerksachsen (9) in je eine linke Achsgruppe (8A, 9A) und eine rechte Achsgruppe (8B, 9B) aufgeteilt sind.

9. Mobilkran mit einem hydropneumatischen Federungssystem (1) nach einem der Ansprüche 1 bis 8.

## Claims

1. Hydro-pneumatic mobile crane suspension system (1) having
- at least one left suspension strut (2), arranged on the left chassis side (L), having a piston chamber (2A) and an annular chamber (2B);
- at least one right suspension strut (3), arranged on the right chassis side (R), having a piston chamber (3A) and an annular chamber (3B);
- a roll stabilisation mechanism (4), which comprises a hydraulic connection (4A) between the piston chamber (3A) of the right suspension strut (3) and the annular chamber (2B) of the left suspension strut (2), and a hydraulic connection (4B) between the piston chamber (2A) of the left suspension strut (2) and the annular chamber (3B) of the right suspension stut (3); **characterised by**
- one discretely switchable valve (5) arranged on the left chassis side (L), and one on the right chassis side (R) respectively, which both optionally disconnects or releases the hydraulic connections (4A, 4B) provided by the roll stabilisation mechanism and also simultaneously releases or disconnects hydraulic connections (6, 7) between the piston chambers (2A, 3A) and the annular chambers (2B, 3B) of the same suspension struts (2, 3).

2. Mobile crane suspension system according to claim 1, wherein the valve (5) has 2-way valves, in particular 3/2- 4/2-way valves, for releasing and disconnecting the connections (4A, 4B) between the piston chambers (2A, 2B) and the annular chambers (2B, 3B) of the left and right suspension struts (2, 3) and/or for disconnecting and releasing the connections (6, 7) between the piston chambers (2A, 3A) and the annular chambers (2B, 3B) of the same suspension struts (2, 3).

3. Mobile crane suspension system according to one of claims 1 to 2, having several left and right suspension struts (2, 3), each pair of which is assigned to one of several chassis axles (8, 9), in particular wherein the hydraulic connections (4A, 4B) of at least one roll stabilisation mechanism (4) hydraulically connect suspension struts (2, 3) of several chassis axles (8, 9) to each other.

4. Mobile crane suspension system according to one of claims 1 to 3, further having at least one locking mechanism (10), which optionally disconnects or releases a hydraulic connection (11) between at least one suspension strut (2, 3) and at least one suspension hydraulic reservoir (12).

5. Mobile crane suspension system according to one of claims 1 to 4, further having at least one lifting mechanism (13), which optionally disconnects or releases a hydraulic connection (14, 15) between at least one suspension strut (2, 3) and at least one hydraulic circuit (16).

6. Mobile crane suspension system according to one of claims 4 or 5, wherein the hydraulic connections (11, 14, 15) optionally disconnected or released from the at least one locking mechanism (10) and/or from the at least one lifting mechanism (13) are disconnected or released regardless of the operating status of the valve (5).

7. Mobile crane suspension system according to one of claims 1 to 6, having a functionally symmetrical construction, relative to the left and right chassis side (L, R), on at least one chassis axle (8, 9).

8. Mobile crane suspension system according to one of claims 1 to 7, wherein several chassis axles (8, 9) are collected in corresponding left and right axle groups (8A, 8B, 9A, 9B), in particular wherein the two front chassis axles (8) in the direction of travel and the four rear chassis axles (9) in the direction of travel are divided into one left axle group (8A, 9A) and one right axle group (8B, 9B).

9. Mobile crane having a hydro-pneumatic suspension system (1) according to one of claims 1 to 8.

## Revendications

1. Système hydropneumatique de suspension de grue mobile (1) comportant :
- au moins une jambe de suspension gauche (2) associée au côté gauche (L) du châssis et présentant une chambre de piston (2A) et une chambre annulaire (2B),
- au moins une jambe de suspension droite (3) associée au côté droit (R) du châssis et présentant une chambre de piston (3A) et une chambre annulaire (3B),
- un dispositif de stabilisation antiroulis (4) comprenant une liaison hydraulique (4A) entre la chambre de piston (3A) de la jambe de suspension droite (3) et la chambre annulaire (2B) de la jambe de suspension gauche (2), et une liaison hydraulique (4B) entre la chambre de piston (2A) de la jambe de suspension gauche (2) et la chambre annulaire (3B) de la jambe de suspension droite (3) ; **caractérisé par**
- une vanne (5) à activation discrète, respectivement associée aux côtés gauche (L) et droit (R) du châssis, qui sépare ou établit sélectivement les liaisons hydrauliques (4A, 4B) assurées par le dispositif de stabilisation antiroulis (4), et qui établit ou sépare simultanément les liaisons hydrauliques (6, 7) entre les chambres de piston (2A, 3A) et les chambres annulaires (2B, 3B) desdites jambes de suspension (2, 3).

2. Système de suspension de grue mobile selon la revendication 1, dans lequel la vanne (5), pour établir et séparer les liaisons (4A, 4B) entre les chambres de piston (2A, 3A) et les chambres annulaires (2B, 3B) des jambes de suspension (2, 3) gauche et droite, et/ou pour séparer et établir les liaisons (6, 7) entre les chambres de piston (2A, 3A) et les chambres annulaires (2B, 3B) desdites jambes de suspension (2, 3), comprend des vannes à 2 voies, notamment des vannes à 3/2 ou 4/2 voies.

3. Système de suspension de grue mobile selon une des revendications 1 et 2, comportant plusieurs jambes de suspension (2, 3) gauches et droites respectivement associées par paires à un essieu parmi les multiples essieux (8, 9) du châssis, lesdites liaisons hydrauliques (4A, 4B) d'au moins un dispositif de stabilisation antiroulis (4) reliant notamment, par voie hydraulique, les jambes de suspension (2, 3) de plusieurs essieux (8, 9) de châssis entre eux.

4. Système de suspension de grue mobile selon une des revendications 1 à 3, comportant en outre au moins un dispositif de blocage (10) qui sépare ou établit sélectivement une liaison hydraulique (11) entre au moins une jambe de suspension (2, 3) et au moins un accumulateur hydraulique de suspension (12).

5. Système de suspension de grue mobile selon une des revendications 1 à 4, comportant en outre au moins un dispositif de levage (13) qui sépare ou établit sélectivement une liaison hydraulique (14, 15) entre au moins une jambe de suspension (2, 3) et au moins un circuit hydraulique (16).

6. Système de suspension de grue mobile selon une des revendications 4 et 5, dans lequel les liaisons hydrauliques (11, 14, 15) qui sont sélectivement séparées ou établies par l'au moins un dispositif de blocage (10) et/ou l'au moins un dispositif de levage (13) sont séparées ou établies indépendamment de l'état d'actionnement de la vanne (5).

7. Système de suspension de grue mobile selon une des revendications 1 à 6, comportant une structure fonctionnellement symétrique - par rapport aux côtés gauche et droit (L, R) du châssis - sur au moins un essieu (8, 9) du châssis.

8. Système de suspension de grue mobile selon une des revendications 1 à 7, dans lequel plusieurs essieux (8, 9) du châssis sont rassemblés en groupes d'essieux gauches et droits (8A, 8B, 9A, 9B) correspondants, les deux essieux (8) du châssis situés à l'avant dans le sens du déplacement et les quatre essieux (9) du châssis situés à l'arrière dans le sens du déplacement étant notamment chacun divisés en un groupe d'essieux gauches (8A, 9A) et un groupe d'essieux droits (8B, 9B).

9. Grue mobile comportant un système hydropneumatique de suspension (1) selon une des revendications 1 à 8.
